# EUROPEAN PATENT APPLICATION

(11) **EP 4 317 730 A1**
(43) Date of publication of application: **07.02.2024**
(21) Application number: 22780185.9
(22) Date of filing: 17.03.2022
(51) Int. Cl.: F16C 33/16, F16J 15/34

(54) **SLIDING COMPONENT**

(30) Priority: 30.03.2021 JP 2021057272
(71) Applicant: Eagle Industry Co., Ltd., Minato-ku Tokyo 105-8587 (JP)
(72) Inventor: ARAI Minehiro, Tokyo 105-8587 (JP)
(74) Representative: WSL Patentanwälte Partnerschaft mbB
(86) International application number: PCT/JP2022/012343
(87) International publication number: WO 2022/209966

(57) **Abstract**

Provided is a sliding component capable of suppressing a rise in sliding surface temperature. Sliding components 10 and 20 have sliding surfaces 11 and 21 sliding relative to each other. A base material 22 of the sliding component 20 is directly coated with a thin film 30 mainly made of glassy carbon, and the sliding surface 21 is formed by the thin film 30.

## Description

### {TECHNICAL FIELD}

The present invention relates to a sliding component that performs relative sliding and is used for, for example, a shaft sealing device shaft-sealing a rotary shaft of a rotating machine in the automotive seal field, the general industrial machinery seal field, or another seal field or a bearing of a machine in the automotive bearing field, the general industrial machinery bearing field, or another bearing field.

### {BACKGROUND ART}

A sliding component has a sliding surface that slides relative to a mating sliding surface and is used as a component of a bearing supporting, for example, a rotating or reciprocating shaft or a shaft sealing device for sealed fluid leakage prevention. A mechanical seal as an example of the shaft sealing device for sealed fluid leakage prevention includes a pair of annular sliding components rotating relative to each other and having sliding surfaces sliding with each other. For example, the sliding component that is disclosed in Patent Citation 1 includes a base material formed of SiC, an adhesive layer on the sliding surface side of the base material, and a sheet-shaped glassy carbon member attached to the base material via the adhesive layer to obtain wear resistance with the glassy carbon present on the sliding surface of the sliding component.

### {CITATION LIST}

### {Patent Literature}

Patent Citation 1: WO 2018/034197 A1 (Page 7, FIG. 2)

### {SUMMARY OF INVENTION}

### {Technical Problem}

However, in the sliding component disclosed in Patent Citation 1, frictional heat resulting from relative sliding with a mating sliding surface stays in the low-thermal conductivity adhesive layer and the sheet-shaped glassy carbon member closer to the sliding surface side than the adhesive layer. As a result, problems arise as it is difficult to dissipate heat and a rise in sliding surface temperature results in an increase in coefficient of friction and cracking.

The present invention has been made in view of such problems, and an object of the present invention is to provide a sliding component capable of suppressing a rise in sliding surface temperature.

### {Solution to Problem}

In order to solve the foregoing problem, a sliding component according to the present invention is a sliding component having a sliding surface performing relative sliding, in which a base material of the sliding component is directly coated with a thin film mainly made of glassy carbon and the sliding surface is formed by the thin film. According to the feature of the present invention, the base material of the sliding component is directly coated with the glassy carbon-centered thin film. As a result, frictional heat resulting from relative sliding with a mating sliding surface is directly transferred from the thin film to the base material, and thus a rise in sliding surface temperature can be suppressed. In addition, the thin film is glassy carbon-centered and thus is excellent in wear resistance and galling is unlikely to occur even in a poor lubrication state.

It may be preferable that the thin film is mainly made of the glassy carbon and graphite is mixed in the thin film. According to this preferable configuration, a part of the graphite mixed in the thin film with which the base material is directly coated enters the unevenness of the surface of the base material to enhance the adhesion of the thin film with respect to the base material.

It may be preferable that the thin film contains a filler with a dimension equal to or less than a film thickness of the thin film. According to this preferable configuration, a filler function is added to the sliding surface, the filler is unlikely to fall off even with the thin film small in film thickness, filler protrusion from the sliding surface can be suppressed as well, and thus the mating sliding surface is unlikely to be damaged by friction.

It may be preferable that the thin film contains a high-thermal conductivity filler higher in thermal conductivity than the glassy carbon included in the thin film. According to this preferable configuration, the glassy carbon-centered thin film contains the high-thermal conductivity filler. As a result, the thermal conductivity of the sliding surface can be enhanced, and thus frictional heat is more easily transferred from the thin film to the base material.

It may be preferable that the thin film contains a low-friction filler lower in coefficient of friction than the glassy carbon included in the thin film. According to this preferable configuration, the glassy carbon-centered thin film contains the low-friction filler. As a result, the lubricity of the sliding surface can be enhanced.

### {BRIEF DESCRIPTION OF DRAWINGS}

FIG. 1 is a longitudinal cross-sectional view illustrating an example of a mechanical seal including a sliding component according to an embodiment of the present invention.
FIG. 2 is an enlarged cross-sectional view illustrating a sliding surface of a rotating seal ring that is yet to be used with a thin film in the embodiment formed.
FIG. 3 is a schematic cross-sectional view illustrating a state where fillers are dispersed in the thin film in the embodiment.
FIG. 4 is an enlarged cross-sectional view illustrating a state where a shear mass of graphite has been generated as a result of sliding between the sliding surface of the rotating seal ring on which the thin film in the embodiment is formed and a sliding surface of a stationary seal ring.
FIG. 5 is an enlarged cross-sectional view illustrating a state after the sliding between the sliding surfaces of the rotating seal ring on which the thin film in the embodiment is formed and the sliding surface of the stationary seal ring.

### {DESCRIPTION OF EMBODIMENTS}

A mode for implementing the sliding component according to the present invention will be described below based on an embodiment.

### {Embodiment}

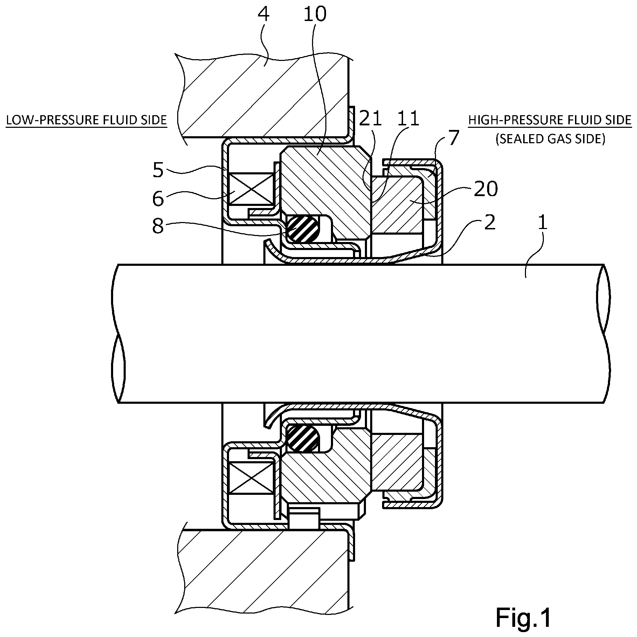

The sliding component according to the embodiment of the present invention will be described with reference to FIGS. 1 to 5. It should be noted that a mode in which the sliding component is a mechanical seal will be described as an example in the present embodiment. In addition, in the following description, the inner diameter side of the sliding component constituting the mechanical seal is a low-pressure fluid side as a leak side and the outer diameter side is a high-pressure fluid side (sealed gas side) as a sealed fluid side.

The mechanical seal for general industrial machinery illustrated in FIG. 1 is an inside mechanical seal that seals a sealed gas to leak from the outer diameter side toward the inner diameter side of a sliding surface in a non-lubricated (that is, dry) environment in which no liquid is interposed between the sliding surfaces.

The mechanical seal mainly includes a rotating seal ring 20 as a sliding component and a stationary seal ring 10 as a sliding component. The rotating seal ring 20 has an annular shape and is provided on a rotary shaft 1 in a state of being rotatable together with the rotary shaft 1 via a sleeve 2. The stationary seal ring 10 has an annular shape and is provided on a seal cover 5 fixed to a housing 4 of an attachment target device in a non-rotating state and a state of being movable in the axial direction. A sliding surface 11 of the stationary seal ring 10 and a sliding surface 21 of the rotating seal ring 20 slide closely with each other by a spring 6 urging the stationary seal ring 10 in the axial direction. In addition, a gasket 7 seals between the rotating seal ring 20 and the sleeve 2, and an O-ring 8 seals between the stationary seal ring 10 and the seal cover 5.

The stationary seal ring 10 and the rotating seal ring 20 in the present embodiment are formed of silicon carbide (SiC). It should be noted that the stationary seal ring 10 and the rotating seal ring 20 may be made of different materials without being limited to being made of the same material.

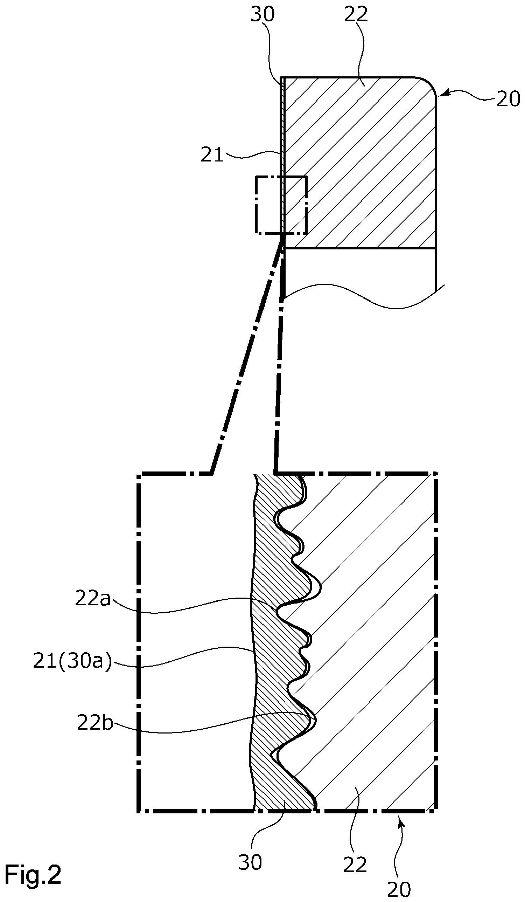

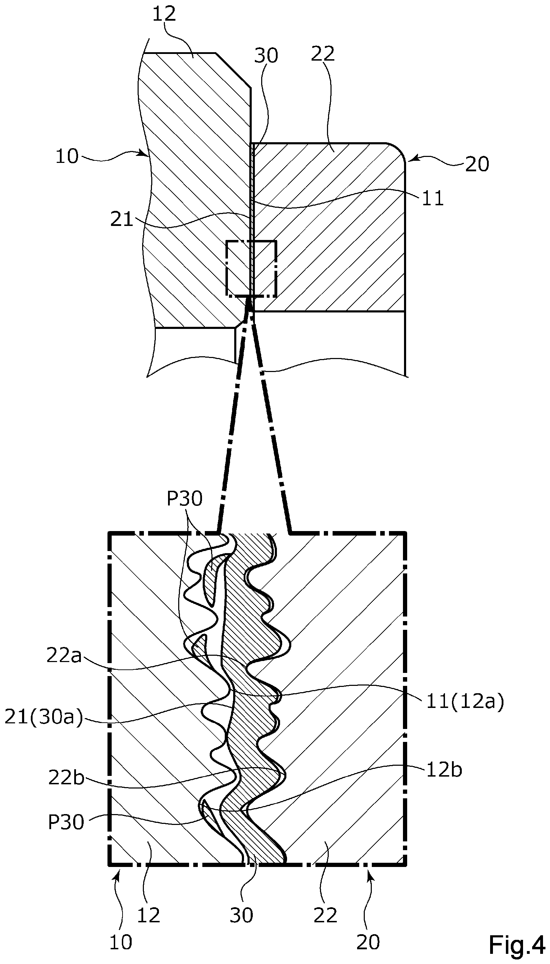

As illustrated in FIG. 2, the rotating seal ring 20 is configured by directly coating a SiC base material 22 as a base material with a thin film 30. In other words, a surface 30a of the thin film 30 constitutes the substantial sliding surface 21 of the rotating seal ring 20. It should be noted that in the present embodiment, no thin film is formed on the sliding surface 11 of the stationary seal ring 10 as a mating sliding surface (see FIG. 4).

It should be noted that as for the sliding surface 21 of the present embodiment, the thickness of the thin film 30 is thicker than the roughness of the SiC base material 22 and the entire surface of one end surface portion 22a of the SiC base material 22 in the axial direction is coated with the thin film 30 as will be described later. However, the present invention is not limited thereto. For example, as for the sliding surface 21, a part of the end surface portion 22a of the SiC base material 22, such as the mountain top portion of the surface, may be exposed without being coated with the thin film 30 by making the thin film 30 thin.

In addition, by the SiC base material 22 being directly coated with the thin film 30, as compared with a case that entails an intermediate layer or the like, the labor of intermediate layer formation is unnecessary and there are no constraints in terms of conditions of use for matching an intermediate layer.

It should be noted that "thin" of the thin film means that the thin film is thinner than the base material.

In addition, in the present embodiment, the thin film 30 has a structure in which the parent material is a skeleton structure of carbon atoms with glassy carbon as a main component, and the film contains high-thermal conductivity fillers 40 and low-friction fillers 41 as fillers.

It should be noted that glassy carbon is mainly configured from carbon atoms, is non-graphitized carbon that is a type of carbon material, and is a substance analyzed by Raman spectroscopic analysis or the like.

Specifically, the thin film 30 of the present embodiment is a glassy carbon-centered thin film, that is, a thin film with a composition that conspicuously exhibits the characteristics of the glassy carbon component of the skeleton structure of the carbon atoms on the surface. It should be noted that some of the carbon atoms in the skeleton structure may form a region configured from graphitized carbon.

As for the thin film 30, a polyamic acid varnish as a precursor solution obtained by dissolving a polyimide resin as a thermosetting resin in an organic solvent is directly applied using an applicator such as a bar coater and a spin coater so as to coat the one end surface portion 22a in the axial direction of the SiC base material 22 constituting the rotating seal ring 20, and imidization is performed by drying and curing treatment. Then, the glassy carbonized skeleton is formed by performing heating and curing at a temperature of 1200°C or lower in an inert atmosphere and further performing firing. In other words, the skeleton structure of carbon atoms in the thin film 30 is polyamic acid-derived.

It should be noted that by the thin film 30 being formed with a thickness within a predetermined range, it is possible to prevent the film from tearing and the thermosetting resin can be turned into glassy carbon by firing at a relatively low temperature. Further, it should be noted that the thin film 30 before initial use may be formed so as to be 1 µm to 100 µm in thickness. At a film thickness that is less than the above value, peeling occurs between the film and the SiC base material 22. At a film thickness that exceeds the above value, cracking occurs during the formation of the film. In addition, regarding the film thickness of the thin film 30, it is preferable to set an optimal value in accordance with the particle diameter of the filler or additive dispersed in the film.

In addition, the end surface portion 22a of the SiC base material 22 coated with the thin film 30 has an arithmetic mean roughness Ra of 0.1 µm or more on the surface thereof, and the thin film 30 is formed in a state where a part of the thin film 30 is in a fine recess 22b of the end surface portion 22a of the SiC base material 22.

In addition, in measuring the hardness of the thin film 30 and the hardness of a SiC base material 12, a test was performed using a nanoindenter and it was confirmed that the SiC base material 12 was harder in value than the thin film 30.

As described above, the thin film 30 of the present embodiment is formed with a glassy carbon region-centered surface by firing a polyimide resin as a thermosetting resin at a temperature of 1200°C or lower. It should be noted that the film composition of the thin film 30 can be determined by analyzing the film composition by, for example, XRD, Raman spectroscopic analysis, or thermal analysis.

In addition, the thin film 30 is preferably formed by firing a polyimide resin as a thermosetting resin at a temperature of 800°C to 1200°C or lower.

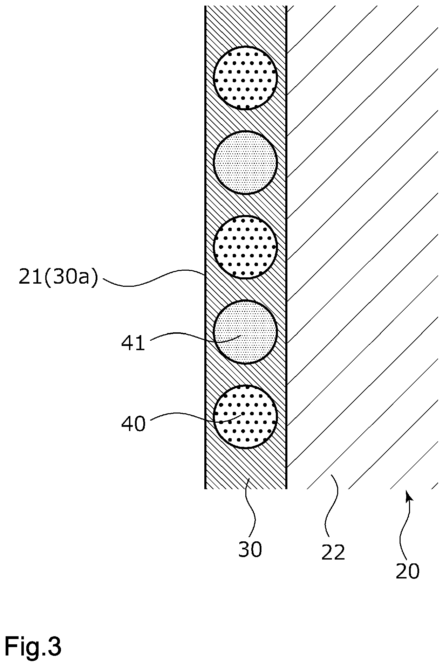

As illustrated in FIG. 3, in the thin film 30, the granular high-thermal conductivity fillers 40 and low-friction fillers 41 with dimensions equal to or less than the film thickness of the thin film 30 are dispersed substantially uniformly. It should be noted that in FIG. 3, for convenience of description, the high-thermal conductivity fillers 40 and the low-friction fillers 41 are illustrated with the same particle diameter. In addition, the fillers may be nanofillers.

In the present embodiment, natural graphite higher in thermal conductivity than the glassy carbon constituting the thin film 30 was used as the high-thermal conductivity filler 40. It should be noted that not only natural graphite but also a filler such as artificial graphite and carbon black (C.B.) may be used as the high-thermal conductivity filler 40.

In addition, the thin film 30 is preferably adjusted such that the content of the high-thermal conductivity filler 40 in the film is 1 to 50 wt%.

In addition, in the present embodiment, kaolin clay lower in coefficient of friction than the glassy carbon constituting the thin film 30 was used as the low-friction filler 41. It should be noted that not only kaolin clay but also a filler such as natural graphite, artificial graphite, and molybdenum disulfide may be used as the low-friction filler 41.

As for the thin film 30 of the present embodiment, the thermal conductivity of the glassy carbon-centered thin film 30 can be enhanced by adding the high-thermal conductivity filler 40 as a main filler and the coefficient of friction of the surface of the thin film 30 can be reduced by adding the low-friction filler 41 by a small amount. It should be noted that the coefficient of friction in a dry environment in particular can be reduced by using kaolin clay as the low-friction filler 41.

In addition, it is preferable that the thin film 30 has a total filler content of 75 wt% or less in order to exhibit the wear resistance of glassy carbon.

In addition, as for the thin film 30, the type, number, and content ratio of the filler contained in the film may be freely changed in accordance with properties required for the sliding surface 21. For example, by adding cerium oxide as a filler in addition to the high-thermal conductivity filler 40 and the low-friction filler 41 described above, silicate deposits attributable to a long life coolant (LLC) can be removed. In addition, electrical properties can be given to the thin film by adding highly crystalline natural or artificial graphite or metal powder (or metal oxide) as a filler.

It should be noted that a spectroscopic analyzer manufactured by Nanophoton Corporation was used to analyze the degree of graphitization of the surface of the thin film 30 and measurement was performed at a center wavenumber of 2082.24 cm⁻¹, an excitation wavelength of 532.36 nm, and a laser intensity of 0.8 mW. IG is the intensity of the G peak at a center wavenumber of 1574 to 1576 cm⁻¹. ID is the intensity of the D peak at a center wavenumber of 1344 to 1348 cm⁻¹. Measurement is performed at a plurality of points in a specific sample region, intensity ratio ID/IG is calculated from the G and D peak intensities of the averaged spectrum, and the value exceeding 1 indicates glassy carbon in the present invention.

A ring-on-ring friction/wear test under the following conditions was conducted regarding the rotating seal ring 20 formed with the thin film 30. The result of the test will be described below. In addition, the stationary seal ring 10 is thin film-less as described above and at least the sliding surface 11 is formed of SiC.

Load = 10 N
Surface pressure of sliding surface of stationary seal ring = 0.25 MPa
Rotation speed of rotating seal ring = 74 rpm
PV factor = 0.008 MPa.m/sec
Test time = up to sliding distance of 1000 m
Sealed fluid = atmosphere

Table 1 shows the result of formation of the thin film 30 of the rotating seal ring 20 (Samples F to M) and the test result of the ring-on-ring friction/wear test in the present embodiment. It should be noted that regarding the ring-on-ring friction/wear test, usability was determined based on whether or not seizure of the sliding surface occurred in a non-lubricated environment. Further, it should be noted that the presence or absence of peeling of the thin film 30 off the sliding surface 21 of the rotating seal ring 20 and the presence or absence of cracking were confirmed after the ring-on-ring friction/wear test. Regarding the confirmation of the presence or absence of the peeling of the thin film, it was determined that the peeling off the sliding surface 21 of the rotating seal ring 20 occurred with deposits removed by air blowing on the sliding surface 21 of the rotating seal ring 20 and the remaining thin film 30 in the fine recess 22b of the end surface portion 22a having an intra-contact range area ratio of 80% or less at a magnification of optical microscope 5x. Regarding the confirmation of the presence or absence of the thin film cracking, the presence or absence of the cracking was confirmed with deposits removed by air blowing on the sliding surface 21 of the rotating seal ring 20.

**{Table 1}**

| Sample | Film thickness (µm) | Usability | Peeling | Cracking |
|---|---|---|---|---|
| F | 1 | ○ | Absent | Absent |
| G | 10 | ○ | Absent | Absent |
| H | 20 | ○ | Absent | Absent |
| I | 50 | ○ | Absent | Absent |
| K | 100 | ○ | Absent | Absent |
| L | 0.5 | - | Present | Absent |
| M | 120 | - | Absent | Present |

It was determined that the thickness was 1 µm to 100 µm in the case of the thin film 30 of the rotating seal ring 20 where the sliding surface was seizure-free and the thin film 30 neither peeled off the sliding surface 21 of the rotating seal ring 20 nor cracked in a non-lubricated environment (Samples F, G, H, I, and K).

The rotating seal ring 20 formed with the thin film 30 in the present embodiment was prepared with the content (wt%) of the high-thermal conductivity filler 40 in the film changed, and a ring-on-ring friction/wear test was conducted under the following conditions. The result of the test will be described below. It should be noted that the thin film 30 of the rotating seal ring 20 is formed with the thickness unified to 20 µm. In addition, the thin film 30 is formed with the content of the low-friction filler 41 in the film unified to 5 wt%. In addition, the stationary seal ring 10 is thin film-less as described above and at least the sliding surface 11 is formed of SiC.

Load = 10 N
Surface pressure of sliding surface of stationary seal ring = 0.25 MPa
Rotation speed of rotating seal ring = 74 rpm
PV factor = 0.008 MPa.m/sec
Test time = up to sliding distance of 1000 m
Sealed fluid = atmosphere

Table 2 shows the test result of the ring-on-ring friction/wear test of the rotating seal ring 20 in the present embodiment (Samples N to S). It should be noted that regarding the ring-on-ring friction/wear test, usability was determined based on whether or not seizure of the sliding surface occurred in a non-lubricated environment. Further, it should be noted that the presence or absence of cracking in the thin film 30 on the sliding surface 21 of the rotating seal ring 20 was confirmed, as in Table 1, after the ring-on-ring friction/wear test.

**{Table 2}**

| Sample | High-thermal conductivity filler (wt%) | Usability | Cracking |
|---|---|---|---|
| N | 5 | × | Absent |
| O | 10 | ○ | Absent |
| P | 15 | ○ | Absent |
| Q | 20 | ○ | Absent |
| R | 25 | ○ | Absent |
| S | 30 | × | Present |

It was determined that the content of the high-thermal conductivity filler 40 was 10 wt% or more and the total content of the high-thermal conductivity filler 40 and the low-friction filler 41 was 30 wt% or less in the case of the thin film 30 of the rotating seal ring 20 that was free from seizure of the sliding surface attributable to an increase in coefficient of friction entailed by a rise in sliding surface temperature in particular and did not crack in a non-lubricated environment (Samples O, P, Q, and R).

It should be noted that in a case where the stationary seal ring 10 as a mating side with respect to the sliding surface 21 that lacks the thin film 30 is formed of carbon, which is a soft material, foreign matter intrusion between the sliding surfaces 11 and 21 results in foreign matter biting into the sliding surface 11 of the stationary seal ring 10 formed of the soft carbon, and then the sliding surface 11 is scraped to result in surface roughness, the smoothness of the sliding surface is lost, and the coefficient of friction is adversely affected. In this manner, a sliding surface of a sliding component formed of carbon is problematic in terms of foreign matter resistance. On the other hand, in the present embodiment, the rotating seal ring 20 is configured by coating the hard SiC base material 22 with the thin film 30 and the mating stationary seal ring 10 is also formed of SiC, which is a hard material, and thus the graphite region softer than the glassy carbon mainly constituting the thin film 30 is preferentially scraped with respect to foreign matter intrusion between the sliding surfaces 11 and 21 and surface roughness of the SiC base materials 12 and 22, which adversely affects the coefficient of friction of the sliding surface, is unlikely to occur.

As described above, the SiC base material 22 of the rotating seal ring 20 according to the present invention is directly coated with the glassy carbon-centered thin film 30 containing the high-thermal conductivity filler 40 and the low-friction filler 41. As a result, frictional heat resulting from relative sliding with the sliding surface 11 of the stationary seal ring 10 is directly transferred from the thin film 30 to the SiC base material 22, and thus a rise in the temperature of the sliding surface 21 can be suppressed. In addition, the SiC base material 22 is unlikely to retain heat as a result of heat dissipation attributable to facing a fluid such as a sealed fluid, heat transfer to the seal cover 5 (see FIG. 1), or the like. In addition, the thin film 30 is glassy carbon-centered and thus is excellent in wear resistance and galling is unlikely to occur even in a poor lubrication state.

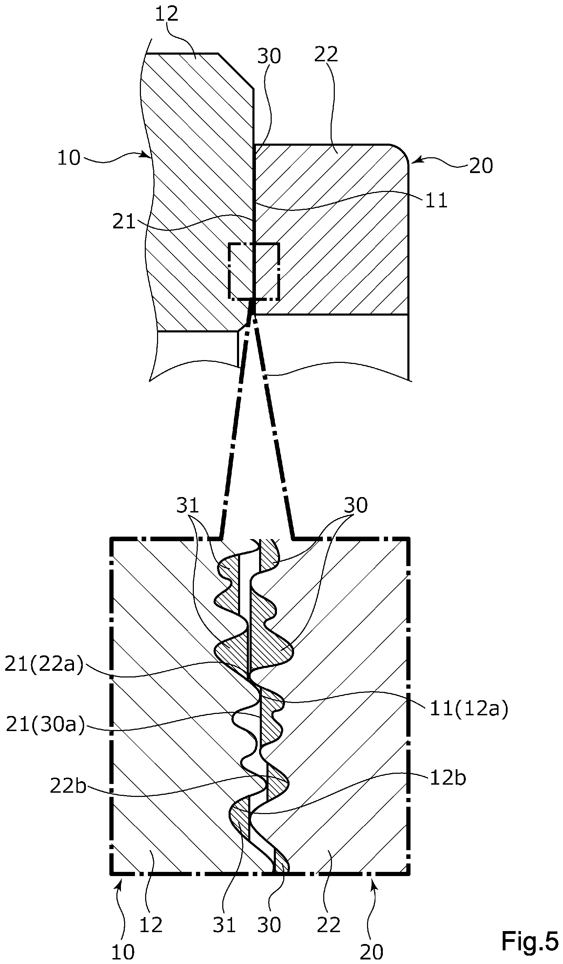

In addition, although the thin film 30 is glassy carbon-centered and may easily peel off in a case where the SiC base material 22 is directly coated with the thin film 30, graphite is mixed in the thin film 30, and thus a part of the graphite region enters the unevenness of the surface of the SiC base material 22 to enhance the adhesion of the thin film 30 with respect to the SiC base material 22. Further, friction with the sliding surface 11 of the stationary seal ring 10 shears the graphite region of the thin film 30 constituting the sliding surface 21 between the graphite layers bonded by a weak van der Waals force (see the enlarged part of FIG. 4). In addition, the pressure contact force between the sliding surfaces 11 and 21 causes an inward push in the axial direction and a part of the thin film 30 enters and remains in the fine recess 22b of the end surface portion 22a of the SiC base material 22 to result in smoothing of the sliding surface 21 (see the enlarged part of FIG. 5). As a result, the remaining thin film 30 in the fine recess 22b is capable of exhibiting the self-lubricating properties of graphite with respect to the sliding surface 11 of the stationary seal ring 10, and thus a stable low-friction effect can be obtained in a wide range of conditions of use such as fluid lubrication areas, boundary lubrication areas, and non-lubricated environments. It should be noted that graphite is more excellent in self-lubricating properties than glassy carbon although glassy carbon also has self-lubricating properties.

In addition, the functions of the high-thermal conductivity filler 40 and the low-friction filler 41 with dimensions equal to or less than the film thickness of the thin film 30 are added to the sliding surface 21 of the rotating seal ring 20 coated with the thin film 30, the high-thermal conductivity filler 40 and the low-friction filler 41 are unlikely to fall off even with the thin film 30 small in film thickness, protrusion from the sliding surface 21 of the high-thermal conductivity filler 40 in particular can be suppressed as well, and thus the sliding surface 11 of the stationary seal ring 10 is unlikely to be damaged by friction. Further, since the SiC base material 22 is coated by firing with the filler-containing thin film 30, a part of the filler enters the unevenness of the surface of the SiC base material 22, and thus the adhesion of the thin film 30 can be enhanced with respect to the SiC base material 22.

In addition, the thin film 30 contains the high-thermal conductivity filler 40 higher in thermal conductivity than the glassy carbon constituting the thin film 30. As a result, the thermal conductivity of the sliding surface 21 configured by the glassy carbon-centered thin film 30 can be enhanced, and frictional heat resulting from relative sliding with the sliding surface 11 of the stationary seal ring 10 is more easily transferred from the thin film 30 to the SiC base material 22. It should be noted that the high-thermal conductivity filler 40 is softer than the sliding surface 11 of the stationary seal ring 10, and thus the mating sliding surface 11 is unlikely to be damaged by friction.

In addition, the thin film 30 is capable of enhancing the lubricity of the sliding surface 21 by containing the low-friction filler 41 lower in coefficient of friction than the glassy carbon constituting the thin film 30.

Further, the thin film 30 is formed only on the sliding surface 21 of the rotating seal ring 20. As a result, a shear mass P30 of graphite derived from the thin film 30 and generated between the sliding surfaces 11 and 21 (see the enlarged part of FIG. 4) is axially pushed in by the pressure contact force between the sliding surfaces 11 and 21, enters and transfers into a fine recess 12b of an end surface portion 12a of the SiC base material 12 constituting the sliding surface 11 of the stationary seal ring 10, and forms a transfer film 31, which results in smoothing of the sliding surface 11 of the stationary seal ring 10 as well (see the enlarged part of FIG. 5). As a result, between the sliding surfaces 11 and 21, the ratio of the SiC-graphite, glassy carbon-graphite, or graphite-graphite sliding part increases, and thus a more satisfactory low-friction effect can be obtained.

In addition, the thin film 30 is formed by directly applying a polyamic acid varnish as a precursor solution obtained by dissolving a polyimide resin as a thermosetting resin in an organic solvent to the end surface portion 22a of the SiC base material 22 and performing firing, and thus the thin film 30 is highly adhesive with respect to the SiC base material 22 by entering the fine recess 22b of the end surface portion 22a of the SiC base material 22. It should be noted that suitable shrinkage occurs in the surface direction and the thickness direction and adhesion can be improved by application and film formation being performed with the polyamic acid varnish as a precursor solution of polyimide resin excellent in film-forming properties adjusted to any viscosity. Therefore, the thin film 30 is not limited in terms of film formation area.

In addition, the thin film 30 of the present invention can be prepared by thin polyamic acid varnish application and firing at a relatively low temperature of 800°C to 1200°C or lower, and thus peeling, tearing, or the like of the thin film 30 attributable to thermal shrinkage is unlikely to occur, excellent workability can be achieved, and glassy carbon-based excellent wear resistance can be exhibited on the sliding surface 21. In addition, the thin film 30 is as thin as 1 µm to 100 µm and contains the fillers with dimensions equal to or less than the film thickness of the thin film 30. As a result, the gas that is generated in the thin film 30 during firing is capable of escaping with ease and cracking can be prevented.

In addition, the sliding surface 11 of the stationary seal ring 10, that is, the SiC base material 12 is harder than the thin film 30, and thus the thin film 30 is softer than the sliding surface 11 of the stationary seal ring 10 and the sliding surface 11 of the stationary seal ring 10 is unlikely to be damaged by friction. Further, the SiC base material 22 of the rotating seal ring 20 is harder than the thin film 30. As a result, in the case of foreign matter intrusion between the sliding surfaces 11 and 21, smoothing of the sliding surface 21 is promoted by the graphite region of the soft thin film 30 in particular being preferentially sheared, foreign matter resistance can be enhanced by the end surface portion 22a of the exposed and hard SiC base material 22 and the glassy carbon region, and thus both the self-lubricating properties of graphite and foreign matter resistance can be achieved between the sliding surfaces 11 and 21.

In addition, the base material of the rotating seal ring 20 is formed of SiC, which is ceramics, and the SiC base material 22 is porous. As a result, the end surface portion 22a has a large number of fine recesses 22b where a part of the thin film 30 enters, roughness occurs more easily than with metal, and thus the thin film 30 is easily fixed on the surface of the base material. Further, as for the end surface portion 22a of the SiC base material 22 where the thin film 30 is formed, the arithmetic mean roughness Ra of the surface is 0.1 µm or more, and thus a part of the thin film 30 enters the fine recess 22b of the end surface portion 22a with greater ease. As a result, even in the event of shearing of the graphite region of the thin film 30 attributable to friction with the sliding surface 11 of the stationary seal ring 10, a part of the thin film 30 is held in the fine recess 22b and is unlikely to fall off between the sliding surfaces 11 and 21.

In addition, the entire surface of the end surface portion 22a of the SiC base material 22 is coated with the thin film 30. In other words, the base material surface is not exposed. As a result, a part of the thin film 30 enters every fine recess 22b in the end surface portion 22a, and thus the sliding surface 21 is easily smoothed by the graphite region of the thin film 30 being sheared.

In addition, the thin film 30 has a thickness of 1 µm to 100 µm. As a result, peeling of the thin film 30 off the end surface portion 22a of the SiC base material 22 and cracking of the thin film 30 can be prevented, and thus the film can be used as a film for sliding components.

Further, the thickness of the thin film 30 exceeds the arithmetic mean roughness Ra of the surface of the end surface portion 22a of the SiC base material 22. In other words, the thickness of the thin film 30 exceeds the unevenness of the surface of the end surface portion 22a of the SiC base material 22. As a result, a part of the thin film 30 easily enters the fine recess 22b of the SiC base material 22, the graphite region of the thin film 30 is reliably sheared by friction with the sliding surface 11 of the stationary seal ring 10, and thus a part of the thin film 30 easily remains in the fine recess 22b and a low-friction effect is exhibited with ease.

In addition, the base material of the rotating seal ring 20 and the sliding surface can be formed of different materials. As a result, while the base material is given the rigidity and high thermal conductivity of ceramics such as SiC, the self-lubricating properties and wear resistance of glassy carbon, the self-lubricating properties of graphite, and the functions of various fillers can be given by the thin film 30 of the sliding surface 21. Further, the cost of the sliding component can be reduced by replacing the base material with an inexpensive material.

In addition, the thin film 30 is glassy carbon-centered and thus is high in hardness and excellent in wear resistance. In particular, the thin film 30 is highly excellent in foreign matter resistance in sliding in slurry. It should be noted that as for the foreign matter resistance of the thin film 30, even in a dry environment or boundary lubrication, seizure of the sliding surface does not occur as the friction is high as in SiC-SiC sliding.

Although an embodiment of the present invention has been described above with reference to the drawings, the specific configurations are not limited to the embodiment and any changes or additions within the scope of the present invention are included in the present invention.

For example, although the mechanical seal for general industrial machinery has been described as an example of the sliding component in the above embodiment, the mechanical seal may be replaced with another mechanical seal for an automobile, a water pump, or the like. In addition, the present invention is not limited to the mechanical seal and may be a sliding component other than a mechanical seal, examples of which include a slide bearing. Further, the thin film 30 can be formed on the inner peripheral surface of a bearing as well and thus is also applicable to sliding components constituting radial bearings and so on.

In addition, although the mechanical seal to which the sliding component is applied is used in a non-lubricated environment in the above embodiment, the present invention is not limited thereto and it may be used in a fluid lubrication area or a boundary lubrication area in which a liquid as a sealed fluid is interposed between the sliding surfaces.

In addition, although an example in which the thin film 30 is provided only on the rotating seal ring 20 has been described in the above embodiment, the thin film 30 may be provided only on the stationary seal ring 10 or may be provided on both the rotating seal ring 20 and the stationary seal ring 10.

In addition, although the thin film 30 in the above embodiment is derived from polyamic acid as a precursor solution obtained by dissolving a polyimide resin in an organic solvent, the present invention is not limited thereto and the thin film may be derived from a precursor solution obtained by dissolving, in an organic solvent, one or two or more thermosetting resins selected from phenol resin, melamine resin, urea resin, epoxy resin, unsaturated polyester resin, silicone resin, diallyl phthalate resin, polyimide resin, polyurethane resin, and so on.

In addition, the filler is not limited to being granular and may be, for example, fibrous.

In addition, the thin film 30 may not contain the low-friction filler 41 insofar as sufficient lubricity is obtained on the sliding surface 21 by the self-lubricating properties of graphite.

In addition, although the thin film 30 in the above embodiment is turned into glassy carbon by changing the firing temperature within the range of 800°C to 1200°C or lower and performing firing for 30 minutes in a nitrogen atmosphere, the present invention is not limited thereto. Alternatively, the firing temperature may be set to the same temperature within the range of 800°C to 1200°C or lower and the firing time may be changed.

In addition, as for the end surface portion 22a of the SiC base material 22 coated with the thin film 30, the arithmetic mean roughness Ra of the surface may be 0.1 µm or less depending on the film thickness of the thin film 30.

In addition, although the stationary seal ring 10 and the rotating seal ring 20 are formed of SiC in the above embodiment, the present invention is not limited thereto and any sliding material can be applied insofar as it is used as a sliding material for a mechanical seal. It should be noted that the SiC may include a sintered body using boron, aluminum, carbon, or the like as a sintering aid and a material made of two or more types of phases having different components and compositions, examples of which include SiC in which graphite particles are dispersed and reaction-sintered SiC made of SiC and Si. In addition to the above sliding materials, other ceramics such as alumina, zirconia, silicon nitride (Si3N4), metal materials, resin materials, composite materials, and so on are also applicable.

### {REFERENCE SIGNS LIST}

- 10: Stationary seal ring (sliding component)
- 11: Sliding surface
- 12: SiC base material (base material)
- 12a: End surface portion
- 12b: Fine recess
- 20: Rotating seal ring (sliding component)
- 21: Sliding surface
- 22: SiC base material (base material)
- 22a: End surface portion
- 22b: Fine recess
- 30: Thin film
- 30a: Surface
- 31: Transfer film
- 40: High-thermal conductivity filler (filler)
- 41: Low-friction filler (filler)
- P30: Shear mass

## Claims

1. A sliding component having a sliding surface performing relative sliding,
wherein a base material of the sliding component is directly coated with a thin film mainly made of glassy carbon and the sliding surface is formed by the thin film.

2. The sliding component according to claim 1, wherein the thin film is mainly made of the glassy carbon and graphite is mixed in the thin film.

3. The sliding component according to claim 1 or 2, wherein the thin film contains a filler with a dimension equal to or less than a film thickness of the thin film.

4. The sliding component according to any one of claims 1 to 3, wherein the thin film contains a high-thermal conductivity filler higher in thermal conductivity than the glassy carbon included in the thin film.

5. The sliding component according to any one of claims 1 to 4, wherein the thin film contains a low-friction filler lower in coefficient of friction than the glassy carbon included in the thin film.
